# EUROPEAN PATENT SPECIFICATION

(11) **EP 4 287 914 B1**
(45) Date of publication and mention of the grant of the patent: **22.04.2026**
(21) Application number: 22748761.8
(22) Date of filing: 02.02.2022
(51) Int. Cl.: A47J 37/07, F24C 3/12, F23D 14/04, F23D 14/10, F23K 5/00, F23N 1/00, F23N 5/02

(54) **GAS GRILL WITH BURNER-BYPASSABLE TEMPERATURE CONTROL**
GASGRILL MIT DURCH DEN BRENNER UMGEHBARER TEMPERATURREGELUNG
GRILL AU GAZ À RÉGULATION DE TEMPÉRATURE À DÉRIVATION DE BRÛLEURS

(30) Priority: 03.02.2021 US 202163199934 P
(43) Date of publication of application: 13.12.2023
(73) Proprietor: Winners Products Engineering Canada Ltd., Toronto, Ontario M2N1M2 (CA)
(72) Inventor: HOU, James, Toronto, Ontario M2N1M2 (CA); DESOUZA, Melanie, Toronto, Ontario M2N1M2 (CA)
(74) Representative: Bals & Vogel Patentanwälte PartGmbB
(86) International application number: PCT/CA2022/050149
(87) International publication number: WO 2022/165591

(56) References cited:
- EP-A1- 3 483 502
- CA-A1- 3 087 241
- US-A1- 2007 048 683
- US-A1- 2010 001 087
- US-A1- 2016 374 510
- US-B2- 10 021 887

## Description

### TECHNICAL FIELD

The following relates generally to gas appliances, and more specifically, to burner-bypassable control of a temperature within a chamber of a gas appliance such as a gas-fired cooking grill.

### BACKGROUND

Typical outdoor gas-fired cooking grills include one or more burners for heating a cooking chamber and one or more manually adjustable valves to control gas flow to the burners. However, factors such as weather conditions (e.g., wind speed/direction, ambient temperature, precipitation) can affect the operation of the gas grill and affect the temperature inside the cooking chamber of the gas grill for a given setting valve. This can make cooking using the gas grill difficult since actual cooking conditions may be uncertain and difficult to predict for various weather conditions.

EP 3 483 502 A1 discloses a cooking appliance comprising at least one burner, an electrode, a push button unit with a push button for activating the electrode, a gas valve for each burner for regulating gas flow arriving from a gas conduit, an electromagnetic shut-off valve arranged in the gas conduit and a control unit. US 2007/048683 A1 discloses a grill for cooking which includes a first set of burners, a second set of burners, a first valve that controls a flow of fuel to the first set of burners and a second valve that controls a flow of fuel to the second set of burners.

### SUMMARY

In one aspect of the invention, a gas-fired cooking grill is provided, the grill comprising: a cooking chamber; a plurality of gas burners for heating the cooking chamber; a plurality of first valves each to control flow of a combustible gas to a respective one of the gas burners; a gas intake to receive the combustible gas from a combustible gas source; and a second valve comprising a thermostatic valve portion, the second valve disposed intermediate the gas intake and plurality of first valves and in fluid communication therewith, the second valve configured to receive input from a user for selection between a first cooking mode and a second cooking mode, the second valve routing the combustible gas from the gas intake to the plurality of first valves in the first cooking mode and routing the combustible gas from the gas intake to the thermostatic valve portion in the second cooking mode, the thermostatic valve portion selectively routing the combustible gas to a subset of the gas burners based on a comparison of a desired temperature and an actual temperature of the cooking chamber.

The second valve may be controlled by a control knob operable by the user.

The control knob may cooperate with the second valve to set the desired temperature.

The thermostatic valve portion may be a capillary valve.

The capillary valve may comprise a temperature sensor bulb for sensing temperature disposed in the cooking chamber, the temperature sensor bulb containing a fluid that expands when heated, the fluid coupled to a diaphragm that causes the capillary valve to move from an open position toward a closed position when the actual temperature of the cooking chamber exceeds the desired temperature.

The gas-fired cooking grill may comprise four burners and four first valves, wherein the second valve configured to selectively bypass two of the four burners.

The four burners may be disposed in generally parallel arrangement and the inner two of the four burners are the burners which are selectively bypassed.

The thermostatic valve may comprise a plurality of ports, one of the ports being coupled to at least one of the burners which is not selectively bypassed and another of the ports being coupled to at least one of another of the burners which is selectively bypassed.

In another aspect of the invention, a gas valve assembly for a gas-fired cooking grill is provided, the assembly comprising: a plurality of first valves each to control flow of a combustible gas to a respective one of a plurality of gas burners for heating a cooking chamber of the gas-fired cooking grill; a gas intake to receive a combustible gas from a combustible gas source; and a second valve comprising a thermostatic valve portion, the second valve disposed intermediate the gas intake and plurality of first valves and in fluid communication therewith, the second valve configured to receive input from a user for selection between a first cooking mode and a second cooking mode, the second valve routing the combustible gas from the gas intake to the plurality of first valves in the first cooking mode and routing the combustible gas from the gas intake to the thermostatic valve portion in the second cooking mode, the thermostatic valve portion selectively routing the combustible gas to a subset of the gas burners based on a comparison of a desired temperature and an actual temperature of the cooking chamber.

The second valve may be controlled by a control knob operable by the user.

The control knob may cooperate with the second valve to set the desired temperature.

The thermostatic valve portion may be a capillary valve.

The capillary valve may comprise a temperature sensor bulb for sensing temperature disposed in the cooking chamber, the temperature sensor bulb containing a fluid that expands when heated, the fluid coupled to a diaphragm that causes the capillary valve to move from an open position toward a closed position when the actual temperature of the cooking chamber exceeds the desired temperature.

The gas-fired cooking grill may comprise four burners and four first valves, wherein the second valve configured to selectively bypass two of the four burners.

The four burners may be disposed in generally parallel arrangement and the inner two of the four burners are the burners which are selectively bypassed.

The thermostatic valve may comprise a plurality of ports, one of the ports being coupled to at least one of the burners which is not selectively bypassed and another of the ports being coupled to at least one of another of the burners which is selectively bypassed.

These and other aspects are contemplated and described herein. It will be appreciated that the foregoing summary sets out representative aspects of the embodiments to assist skilled readers in understanding the following detailed description.

### DESCRIPTION OF THE DRAWINGS

A greater understanding of the embodiments will be had with reference to the Figures, in which:
FIG. 1 is a front schematic view of a gas grill including an exemplary system for controlling a temperature of a cooking chamber of the gas grill;
FIG. 2 is a perspective view of the system for controlling the temperature of the cooking chamber of the gas grill of FIG. 1;
FIG. 3 is a perspective view of another exemplary system for controlling the temperature of the cooking chamber of the gas grill of FIG. 1;
FIG. 4 is an enlarged view of region R4 of FIG. 3;
FIGS. 5A, 5B, 5C and 5D are a perspective view, top view, front view and right side view, respectively of an exemplary thermostatic valve of the system of FIG. 2;
FIG. 6 is an exemplary schematic representation of the system of FIG. 2 showing an exemplary internal configuration of the thermostatic valve of FIGS. 5A-5D;
FIGS. 7A and 7B illustrate a four-burner gas-fired cooking grill in, respectively, a first cooking mode shown and a second cooking mode;
FIG. 8A illustrates a conceptual drawing of a system for bypassably controlling a temperature of a cooking chamber of a gas grill, in accordance with an embodiment, in the first cooking mode;
FIG. 8B illustrates a conceptual drawing of the system for bypassably controlling a temperature of a cooking chamber of a gas grill, in accordance with the system of FIG. 8A, in the second cooking mode;
FIG. 9 illustrates a perspective view of an embodiment of a second valve for use in the system of FIG. 8A;
FIG. 10A is a cutaway front view of the second valve, in accordance with FIG. 9, in the first cooking mode;
FIG. 10B is a cutaway front view of the second valve, in accordance with FIG. 9, in the second cooking mode;
FIG. 11 illustrates a perspective view of a valve stem of the second valve of FIG. 9;
FIG. 12A illustrates a partial cutaway top view of the second valve of FIG. 9 while in the first cooking mode;
FIG. 12B illustrates a partial cutaway side view of the second valve of FIG. 9 while in the first cooking mode; and
FIG. 12C illustrates a partial cutaway side view of the second valve of FIG. 9 while in the second cooking mode.

### DETAILED DESCRIPTION

Embodiments will now be described with reference to the figures. For simplicity and clarity of illustration, where considered appropriate, reference numerals may be repeated among the Figures to indicate corresponding or analogous elements. In addition, numerous specific details are set forth in order to provide a thorough understanding of the embodiments described herein. However, it will be understood by those of ordinary skill in the art that the embodiments described herein may be practised without these specific details. In other instances, well-known methods, procedures and components have not been described in detail so as not to obscure the embodiments described herein. Also, the description is not to be considered as limiting the scope of the embodiments described herein.

Various terms used throughout the present description may be read and understood as follows, unless the context indicates otherwise: "or" as used throughout is inclusive, as though written "and/or"; singular articles and pronouns as used throughout include their plural forms, and vice versa; similarly, gendered pronouns include their counterpart pronouns so that pronouns should not be understood as limiting anything described herein to use, implementation, performance, etc. by a single gender; "exemplary" should be understood as "illustrative" or "exemplifying" and not necessarily as "preferred" over other embodiments. Further definitions for terms may be set out herein; these may apply to prior and subsequent instances of those terms, as will be understood from a reading of the present description.

The following relates generally to gas appliances, and more specifically, to bypassable control of a temperature within a chamber of a gas appliance such as a gas-fired cooking grill.

In various embodiments, aspects of the present disclosure may be particularly useful for controlling a temperature in a cooking chamber of a gas-fired cooking grill. In some embodiments, the use of the systems and methods described herein may improve control and predictability of cooking conditions within a cooking chamber of an outdoor gas-fired cooking grill.

Aspects of the present disclosure may also be useful for controlling the operation of other types of appliances such as gas-fired outdoor heaters, gas-fired fireplaces and gas-fired smokers for example. In various appliances, the systems and methods described herein may be used to control a temperature of a chamber such as a compartment, a partially enclosed space or cavity of such appliances.

The term "connected" or "coupled" may include both direct connection/coupling, in which two elements are connected/coupled to each other without any intermediate element(s), and indirect coupling, in which at least one additional element is located between the two elements. In relation to coupling of valves, burners, manifolds and conduits, the terms "connected" or "coupled" may further refer to fluid communication. The term "substantially" as used herein may be applied to modify any quantitative representation which could permissibly vary without resulting in a change in the basic function to which it is related. Aspects of various embodiments are described through reference to the drawings.

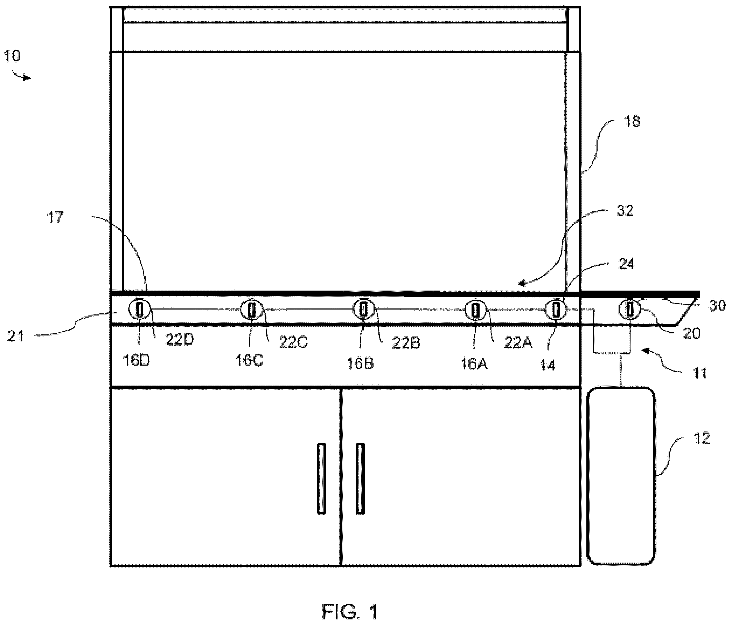

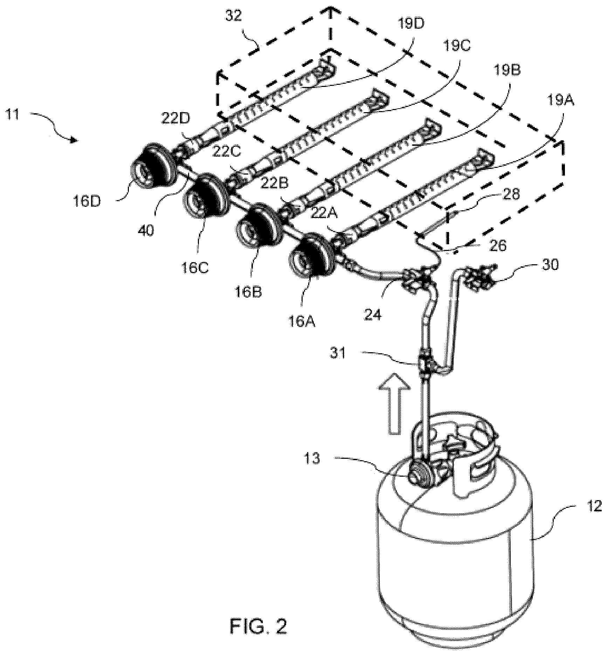

FIG. 1 depicts a front schematic view of gas-fired cooking grill 10 including system 11 for operating gas grill 10. Gas grill 10 may include cooking grate 17 and lid 18. Lid 18 may be used to cover cooking grate 17 to create an enclosed cooking chamber 32 (also shown schematically in FIG. 2) for cooking food. Both cooking grate 17 and lid 18 may be made of a metallic material such as cast iron, stainless steel, or chrome-plated steel that can withstand the heat of grilling and that exhibits suitable corrosion resistance.

System 11 may include fuel reservoir 12 for supplying gaseous fuel to burners 19A-19D (also referred generally herein as "burners 19") (see FIG. 2). In various embodiments, fuel reservoir 12 may be a tank containing propane, butane or natural gas for example. In some embodiments, fuel reservoir 12 may be a portable container releasably connectable to system 11. It is understood that system 11 may be connected to a fuel supply line from a (e.g., natural) gas utility instead of fuel reservoir 12. System 11 may also include pressure regulator 13 (shown in FIG. 2) which serves to regulate (e.g., reduce) the pressure of the gas being supplied to system 11 from fuel reservoir 12.

System 11 may include one or more first valves 22A-22D (also referred generally herein as "first valves 22") that are each operatively controlled by a respective one of control knobs 16A-16D (also referred generally herein as "control knobs 16"). Control knobs 16 may be used for adjusting a setting of a respective one of first valves 22. First vales 22A-22D may be manually adjustable by turning of control knobs 16. System 11 may include second valve 24 that is operatively controlled by control knob 14. Control knob 14 may be used for adjusting a setting of second valve 24. Control knob 14 may be associated with, as described below, a display/indication of a range of temperatures for the purpose of specifying a desired temperature setting of cooking chamber 32. Control knob 14 may be manually adjusted to a temperature within the range of temperatures that is desired for cooking chamber 32 of gas grill 10. First valves 22A-22D may be of a different type than second valve 24.

In some embodiments, gas grill 10 may include a side burner (not shown) operatively controlled by third valve 30. Control knob 20 may be used for adjusting a setting of third valve 30. In some embodiments, first valve(s) 22A-22D and third valve 30 may be of the same type.

Control knobs 14, 16 and 20 may project from control panel 21 and corresponding valves 24, 22 and 30, respectively may be at least partially disposed behind control panel 21.

FIG. 2 shows a perspective view of system 11 of gas grill 10. System 11 may be connected to fuel reservoir 12 and may include gas burners 19, first valves 22 and second valve 24. Gas burners 19 may include perforated metallic tubes having internal passages for receiving gas via respective first valves 22 and second valve 24. Gas burners 19 may include perforations disposed along the metallic tubes for releasing the gas from the metallic tubes.

Fuel contained in fuel reservoir 12 may be supplied to flow splitter 31 that is configured to distribute gas between multiple branches of system 11. As depicted, gas may be supplied to second valve 24 and/or third valve 30 via flow splitter 31. Flow splitter 31 may be a tee pipe fitting for example.

Third valve 30 may be associated with a side burner (not shown) to control gas flow to the side burner. Third valve 30 may be adjustable to adjust the gas flow to the side burner. Third valve 30 may be adjusted using control knob 20 (shown in FIG. 1). The side burner may be external of chamber 32 and may be unaffected by a setting of second valve 24. In some embodiments, gas grill 10 may include one or more additional burners that are external of chamber 32 and/or may be unaffected by second valve 24. For instance, gas grill 10 may include one or more other optional (e.g., side or other) burners that bypass second valve 24 so as to be unaffected by a setting of second valve 24.

Each one of first valves 22 may be associated with a respective one of burners 19 and may be configured to control a gas flow to the respective one of gas burners 19. Burners 19 may be used for heating chamber 32. In some embodiments, burners 19 may be located within chamber 32. Burners 19 may be disposed under cooking grate 17 (shown in FIG. 1). Each one of first valves 22 may be adjustable to adjust respective gas flows supplied to burners 19. Each one of first valves 22 may be manually adjusted using a respective one of control knobs 16.

Second valve 24 may be located upstream of first valves 22 in system 11 (i.e., intermediate the fuel reservoir 12 and first valves 22) and may be configured to controllably supply gas to burners 19 via first valves 22. Second valve 24 and first valve(s) 22 may be disposed in series between fuel reservoir 12 and one or more of burners 19. Second valve 24 may be used for controlling a temperature of chamber 32. Second valve 24 may be adjustable for setting the desired temperature of chamber 32. A position of control knob 14 (shown in FIG. 1) may be indicative of the desired temperature of chamber 32. Second valve 24 may be automatically adjustable based on a desired temperature setting of chamber 32 and an actual temperature of chamber 32.

In some embodiments, second valve 24 may be a thermostatic valve automatically adjustable to control gas flow for maintaining a desired temperature at a location such as inside of cooking chamber 32. In some embodiments, second valve 24 may be operatively connected to a temperature sensing element such as capillary tube 26 that is operatively connected to temperature sensor bulb 28. Bulb 28 and capillary tube 26 may be integrally formed or may be separate components that are operatively connected to (e.g., in fluid communication with) each other. A suitable fluid (e.g., vapour or liquid) contained within bulb 28 or capillary tube 26 may expand when heated and contract when cooled and the change in pressure in bulb 28 and capillary tube 26 may cause closing and opening of second valve 24.

Bulb 28 may be located within chamber 32 of gas grill 10 and/or otherwise exposed to the actual temperature of chamber 32. It is understood that bulb 28 may be located in another location having a temperature related to the temperature within chamber 32. In some embodiments, second valve 24 may be a capillary-type thermostatic valve that includes capillary tube 26 and temperature sensing bulb 28. For example, second valve 24 may be of a type known as a thermal expansion valve or a thermostatic expansion valve (often abbreviated as TEV, TXV, or TX valve). Second valve 24 may function as a metering device for metering the flow of fuel to one or more burners 19 as a function of the temperature to which bulb 28 is exposed to maintain a desired temperature inside of the cooking chamber 32.

System 11 may also include gas manifold 40 for distributing the gas from second valve 24 to first valves 22. Manifold 40 may include an inlet for receiving gas from second valve 24 and a plurality of outlets for delivering the gas to first valves 22 and associated burners 19. Manifold 40 and other gas lines of system 11 may be implemented using suitable tubes and/or hoses and fittings for example.

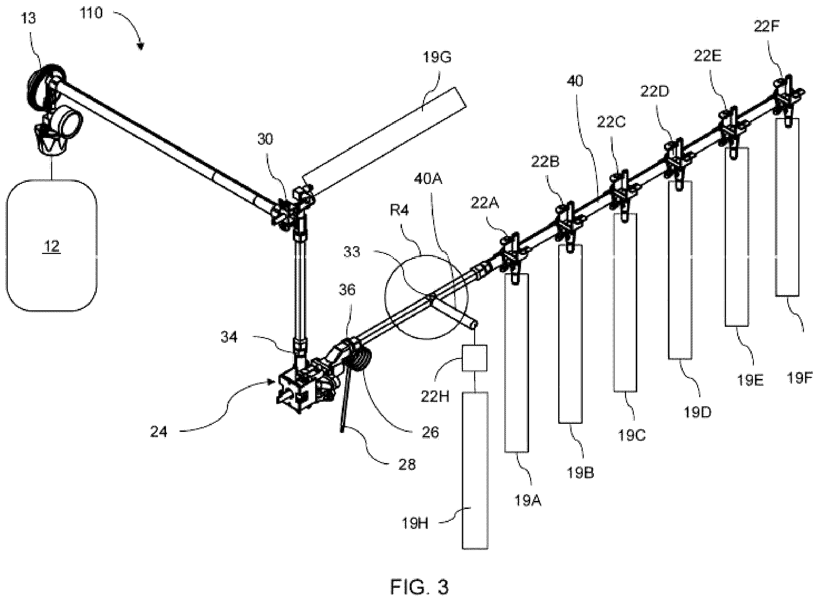

Although FIGS. 1-2 show system 11 including four burners 19, it is understood that system 11 may include a different number of burners 19 (e.g. one, two, three, four, six or eight) that are each controllably supplied gas by an associated first valve 22. FIG. 3 is a perspective view of another exemplary system 110 for controlling the temperature of the cooking chamber of the gas grill of FIG. 1. System 110 may include elements that are identical or similar to those of system 11 and like elements are identified using like reference characters. Fuel reservoir 12 and burners 19 are shown schematically. System 110 may include any number of burners 19. For example, burners 19 may be main burners used to heat cooking chamber 32 of cooking grill 10.

System 110 may include one or more burners 19G that bypass second valve 24 and that may be controlled via one or more third valves 30. Such burners 19G may include a side burner and/or a (e.g., rear) rotisserie burner of cooking grill 10 for example.

System 110 may include one or more burners 19H that are disposed downstream of second valve 24 and that may also be controlled via second valve 24. Burners 19H may also be controllable via first valve 22H. Burner 19H may be disposed inside of cooking chamber 32 but may be disposed at a different location within cooking chamber 32. For example, burners 19A-19F may be disposed under cooking grate 17 and burner 19H may be a (e.g., rear) rotisserie burner that is disposed above cooking grate 17. It is understood that one of more gas manifolds 40 and associated burners 19 may be connected downstream of second valve 24 and may be controllable via second valve 24. For example, one or more additional gas manifolds 40A may be fluidly coupled to gas manifold 40 via tee fitting 33.

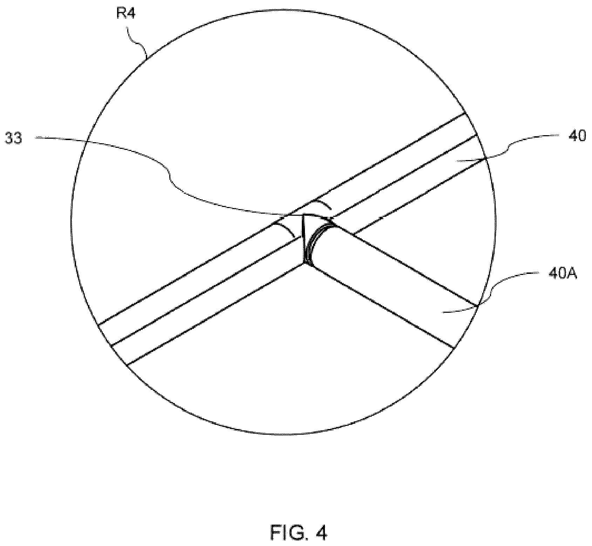

FIG. 4 is an enlarged view of region R4 of FIG. 3 showing additional gas manifold 40A being fluidly coupled to gas manifold 40 via tee fitting 33. Manifolds 40, 40A may be coupled to tee fitting 33 via threaded engagement or welding for example.

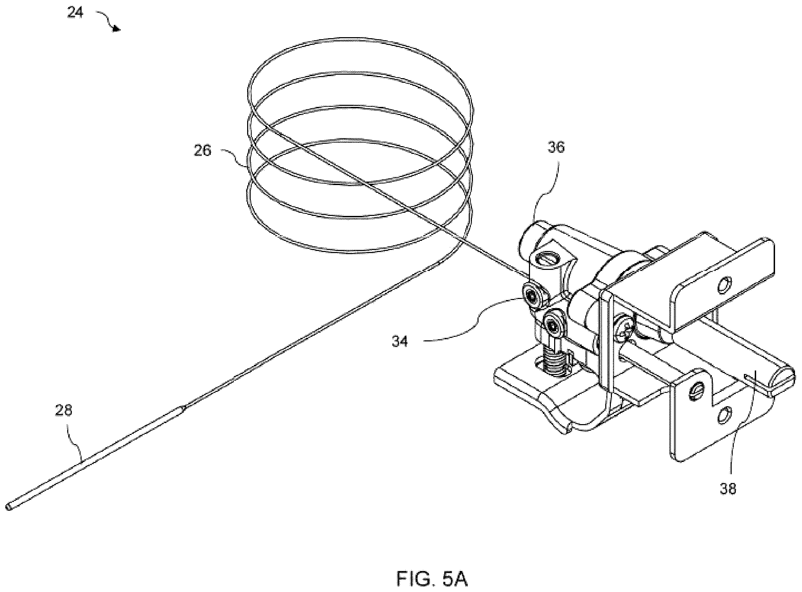

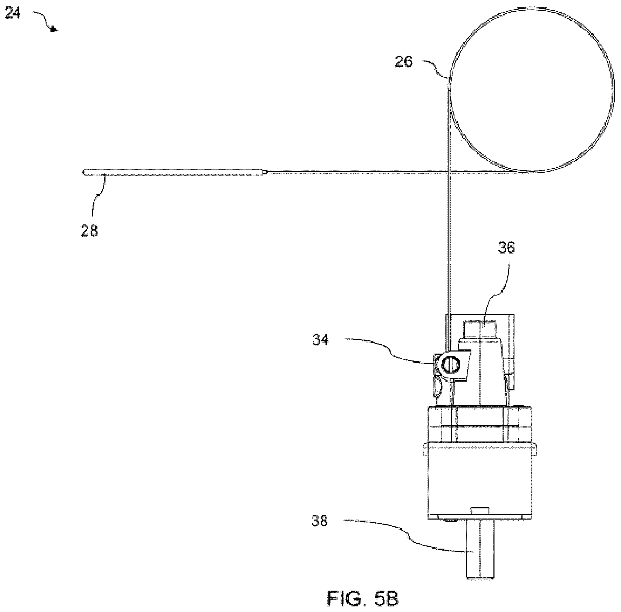

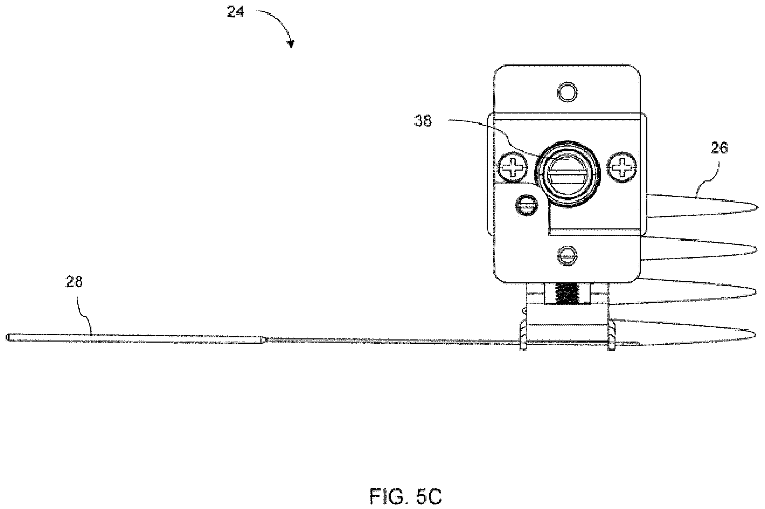

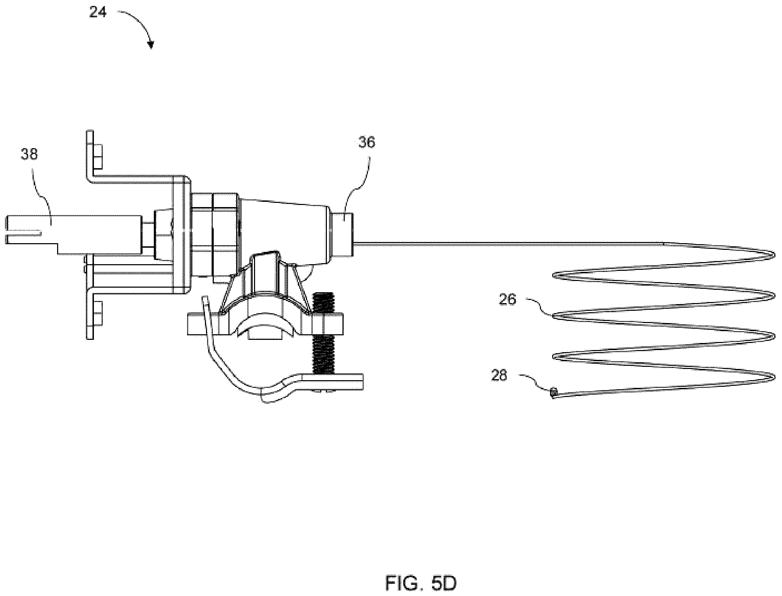

FIGS. 5A-5D are a perspective view, top view, front view and right side view, respectively of an exemplary second valve 24. Control knob 14 has been removed from interface 38 which may be a rotatable shaft. Second valve 24 may include inlet 34 for receiving gas from fuel reservoir 12 and outlet 36 that is connected to manifold 40 (shown in FIGS. 2 and 3).

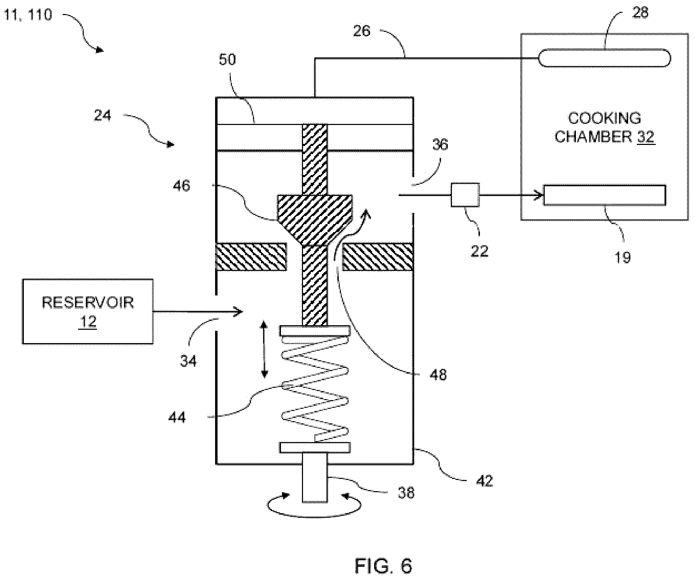

FIG. 6 is an exemplary schematic representation of systems 11, 110 showing an exemplary internal configuration of second (e.g., thermostatic) valve 24. Interface 38 may be rotatable and in threaded engagement with valve body 42 or other component and also be operatively coupled to an actuator such as spring 44 of second valve 24. Spring 44 may serve to influence the movement of valve member 46 to open or close orifice 48 through which gas from reservoir 12 is output to manifold 40. When control knob 14 is adjusted to cause rotation of interface 38, a preloading of spring 44 may be adjusted in order to adjust a compression amount thereof causing adjustment of a biasing force applied to valve member 46 by spring 44. Angular positions of knob 14 may be calibrated to corresponding exposure temperatures of bulb 28 and consequently set desired temperatures of chamber 32. The adjustment of control knob 14 may set an operating range of valve member 46 of second valve 24.

Fluid contained within capillary tube 26 and/or bulb 28 may have a coefficient of thermal expansion such that the exposure of bulb 28 to different temperatures may result in changes in volume of the fluid and/or changes in pressure within capillary tube 26 and bulb 28. Bulb 28 may be disposed within chamber 32 and exposed to elevated temperatures when gas grill 10 is in use. The fluid within bulb 28 may increase in temperature causing thermal expansion of the fluid. As a volume of the fluid within bulb 28 is increased, some of the fluid may be forced into capillary tube 26. The fluid in capillary tube 26 may engage with diaphragm 50 that is operatively coupled to valve member 46 and causes actuation of valve member 46 in response to changes in pressure inside of capillary tube 26. A magnitude of the force exerted on diaphragm 50 and the corresponding displacement of diaphragm 50 may be related to an actual temperature within chamber 32. An increase in pressure inside of capillary tube 26 caused by an increase in temperature inside of cooking chamber 32 may urge valve member 46 toward a closed position. In reference to FIG. 6, an increase in temperature inside of chamber 32 may cause diaphragm 50 to urge valve member 46 downwardly to cause closing of orifice 48 disposed between inlet 34 and outlet 36 of second valve 24.

Spring 44 may be engaged with valve member 46 and oppose the closing force applied to valve member 46 by diaphragm 50. In other words, spring 44 may urge valve member 46 toward an open position (e.g., upwardly in reference to FIG. 6). Accordingly, a net force exerted on valve member 46 by spring 44 and diaphragm 50 may dictate the position of valve member 46 relative to orifice 48. When an actual temperature of chamber 32 is lower than a desired temperature of chamber 32, the net force exerted on valve member 46 by spring 44 and diaphragm 50 may cause valve member 46 to move toward a fully open position to increase gas flow to burners 19. In contrast, when an actual temperature of chamber 32 is higher than a desired temperature of chamber 32, the net force exerted on valve member 46 may cause movement of valve member 46 toward the closed position to decrease gas flow to burners 19. In a situation where the temperature of chamber 32 is equal to the desired temperature of chamber 32 set via interface 38, the net force exerted on the valve member of second valve 24 may be zero and may result in valve member 46 of second valve 24 remaining stationary. Accordingly, second valve 24 may function as a feedback metering device for controlling the temperature inside of cooking chamber 32 based on the temperature selected via interface 38.

In a further embodiment, the gas-fired cooking grill 10 can include two cooking modes; a first cooking mode (referred to as a 'BBQ mode') and a second cooking mode (referred to as an 'oven mode'). The first cooking mode operates with each burner 19 operating independently based on their respective control knob 16. In the second cooking mode, at least a portion of the burners 19 are bypassed. Advantageously, bypassing at least a portion of the burners 19 allows for safe operation at low temperatures, using automatic adjustment of the second valve 24 using the capillary tube 26.

Generally, burners have a minimum gas output (measured in BTUs) at which they can safely operate without having a blowout; whereby there is not enough combustible gas output to sustain a flame. A blowout is particularly serious and dangerous because the toxic and combustible gas is still being outputted without combustion. In this embodiment, having a bypassable second valve 24 allows the system to automatically only provide gas to a portion of the burners. This allows the grill 10 to reach a low enough temperature without dangerously allowing a situation whereby too many burners 19 receive gas due to open control knobs 16; and thereby the gas flow is below the minimum gas output and there becomes a risk of blowouts.

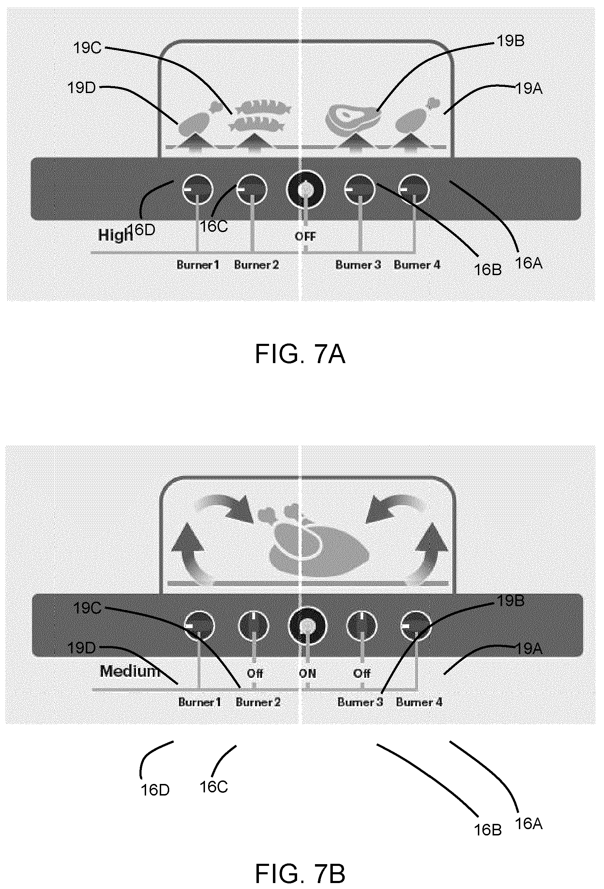

FIGS. 7A and 7B illustrate a four-burner gas-fired cooking grill 10 in the first cooking mode shown in FIG. 7A and the second cooking mode in FIG. 7B. As illustrated, all four burners (19A to 19D) are operational in the first cooking mode and only Burner 1 19A and Burner 4 19C are operational in the second cooking mode. The burner arrangement shown, when considered with FIG. 2, is exemplary in nature but represents a typical arrangement wherein the four burners are generally disposed in parallel and the inner two of the four burners are the burners which are selectively bypassed, which results in good heat distribution.

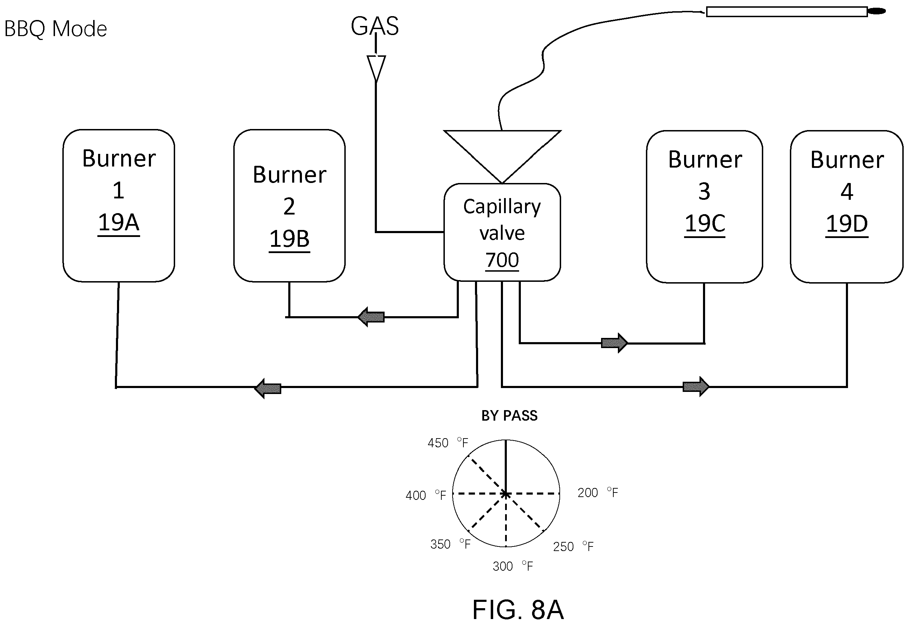

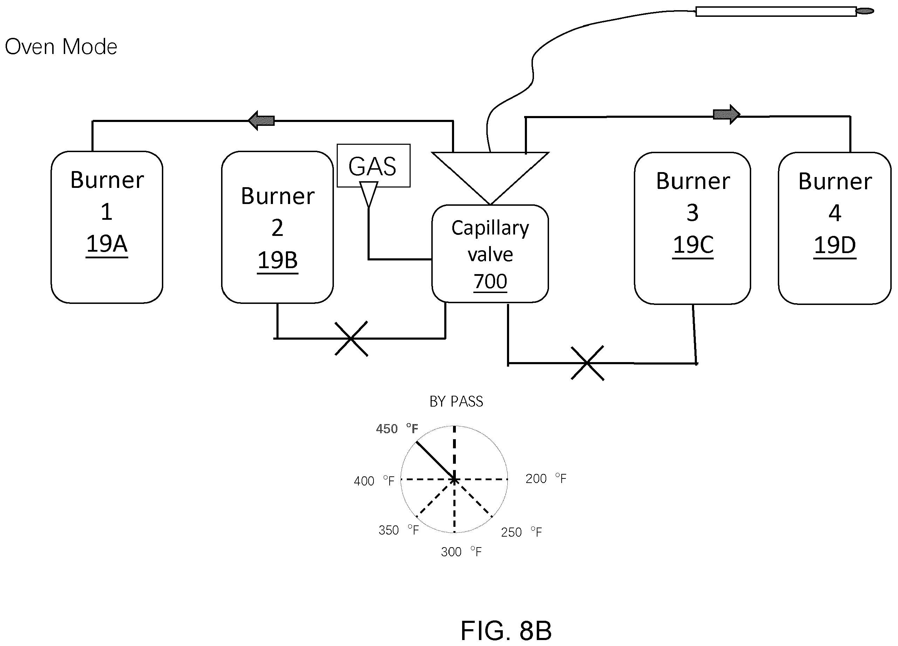

FIG. 8A illustrates a conceptual drawing of a system for bypassably controlling a temperature of a cooking chamber of a gas grill, in accordance with an embodiment, in the first cooking mode; whereby supply gas is provided to a second valve 700 (a capillary-type valve) which routes the gas to each of the four burners (19A to 19D), via the first valves (16A to 16D), as described herein. FIG. 8B illustrates a conceptual drawing of the system in the second cooking mode, whereby supply gas is provided to the second valve 700, which routes the gas to only the first burner 19A and the fourth burner 19D via the first valves (16A and 16D).

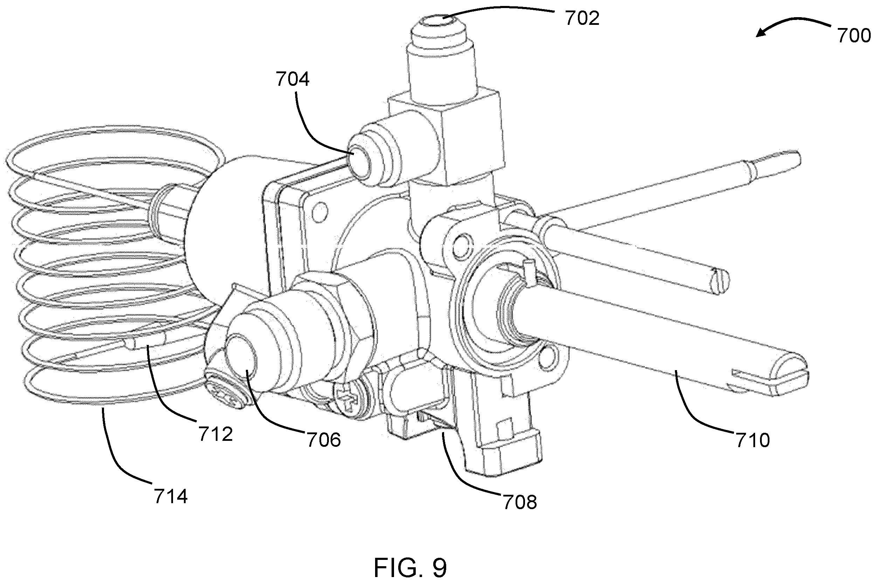

FIG. 9 illustrates a perspective view of the second valve 700 according to the present embodiment. The combustible gas intake 706 receives the gas from a gas source. The second valve 700 is connected to Burner 3 19C with a hose connected to Port 3 702 and to Burner 2 19B with a hose connected to Port 2 704. The second valve 700 is connected to Burner 1 19A and Burner 2 19D through Port 1 708, for example, via a manifold.

The second valve 700 includes a valve stem 710 to receive a control knob. The valve stem 710 is used to select between the first and second cooking modes and, in some cases, to set the desired temperature of the chamber 32. The second valve 700 also includes a capillary tube 714 that is operatively connected to a temperature sensor bulb 712. A suitable fluid (e.g., vapour or liquid) contained within bulb 28 and/or capillary tube 26 may expand when heated and contract when cooled and the change in pressure in bulb 28 and capillary tube 26 may cause closing and opening of the second valve 700 to, respectively, selectively allow or cease routing of the gas to the first burner 19A and the fourth burner 19D.

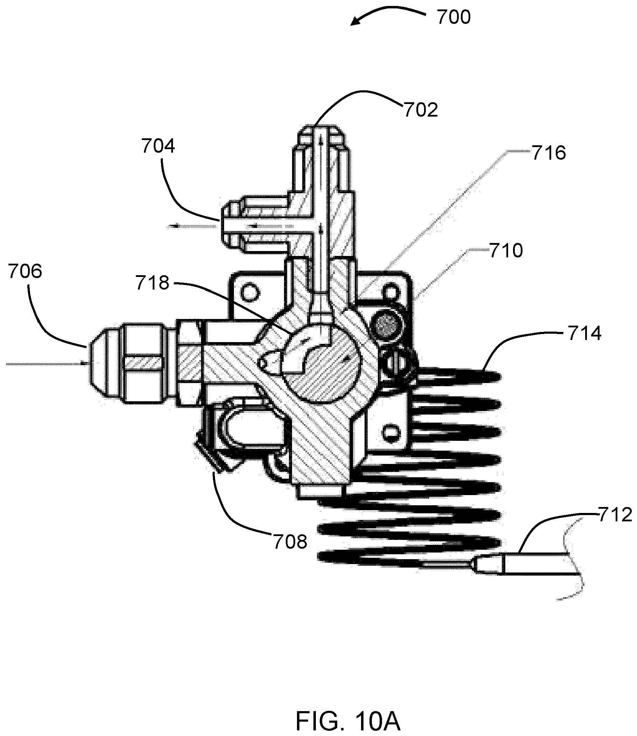

FIG. 10A is a cutaway front view of the second valve 700 in the first cooking mode. As shown, gas is received at the gas intake 706 which is routed through a first channel 718 formed between a valve body 716 and the valve stem 710. In this configuration, the first channel 718 is in communication with the Port 3 702 and the Port 2 704.

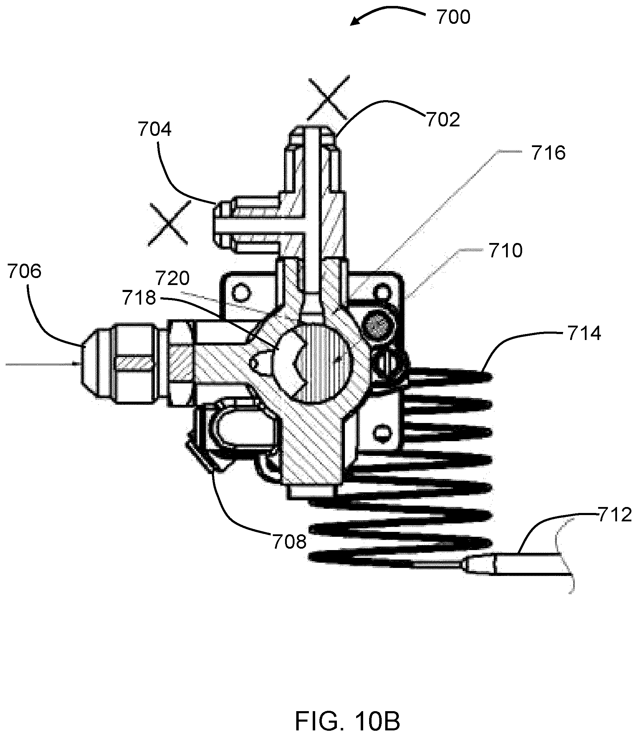

FIG. 10B is a cutaway front view of the second valve 700 in the second cooking mode. As shown, the first channel 718 is no longer in communication with the Port 3 702 and the Port 2 704 due to the rotation of the valve stem 710 causing a blockage at portion 720.

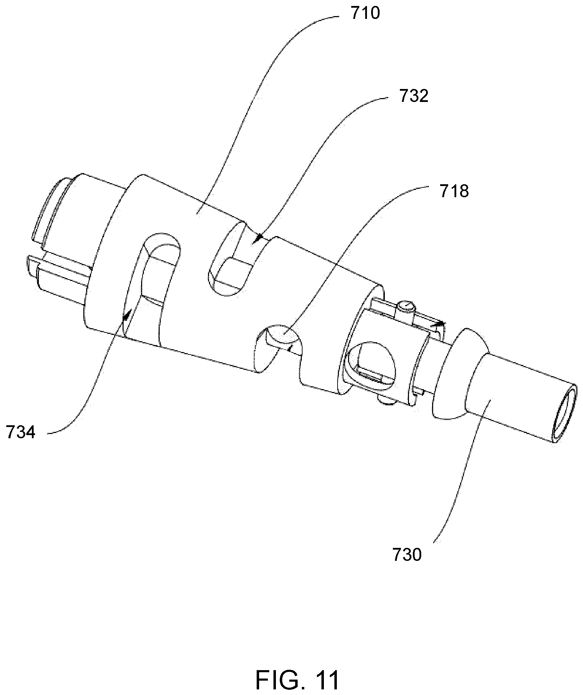

FIG. 11 illustrates a perspective view of the valve stem 710. The valve stem includes an end portion 730 to receive a control knob thereon. The valve stem 710 defines three channels. The first channel 718 provides a pathway for routing of gas to the Port 3 702 and the Port 2 704 in the first cooking mode. The second channel 732 provides a pathway for routing of gas to the Port 1 708 in the first cooking mode, to provide fuel for the first burner 19A and the fourth burner 19D. The third channel 734 provides a pathway for routing of gas to the Port 1 708 in the second cooking mode, to provide fuel for the first burner 19A and the fourth burner 19D when the capillary valve is open and cease fuel to the first burner 19A and the fourth burner 19D when the capillary valve is closed.

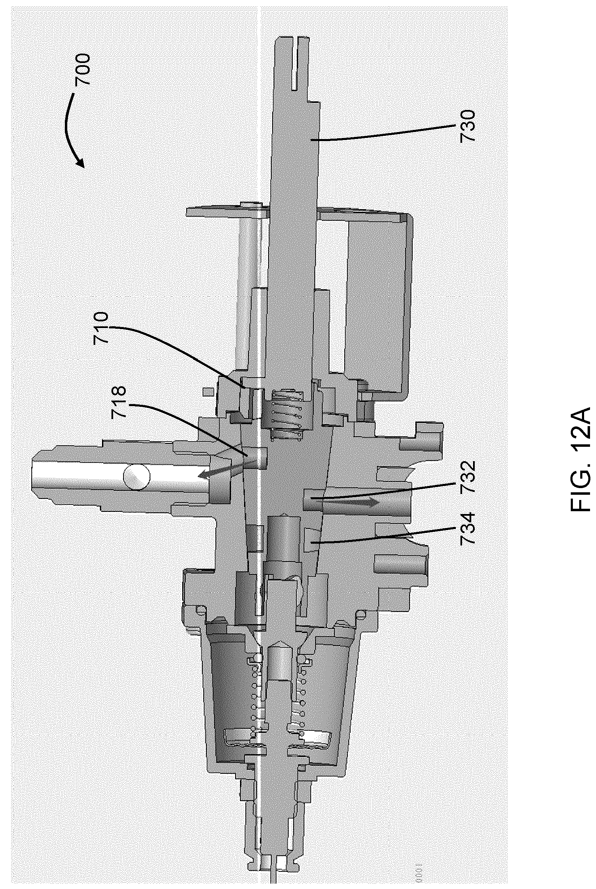

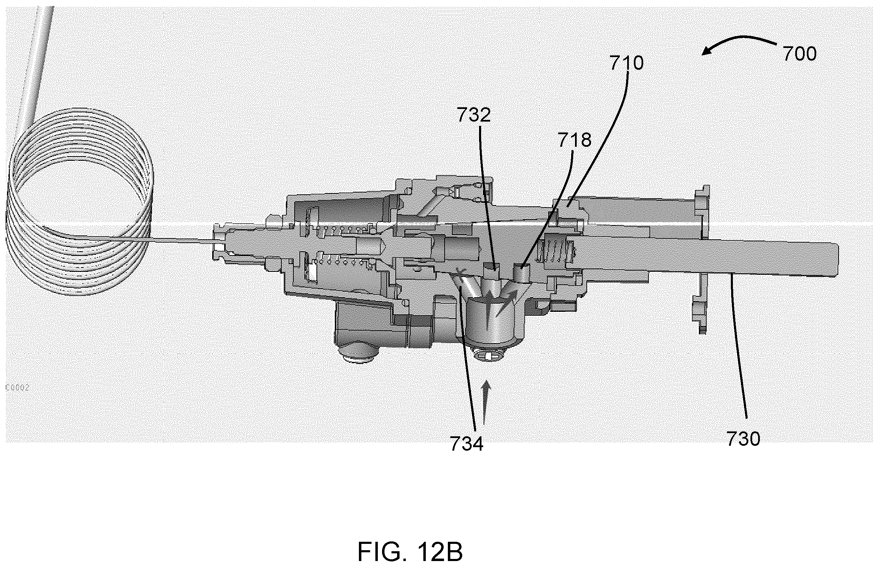

FIGS. 12A and 12B illustrate a partial cutaway top view and side view, respectively, of the second valve 700 while in the first cooking mode. Illustrating that rotation of the valve stem 710 in this configuration has the first channel 718 in communication with a pathway that ultimately routes gas to the Port 3 702 and the Port 2 704, and the second channel 732 in communication with a pathway that ultimately routes gas to the Port 1 708. While third channel 734 is blocked from receiving any of the intake gas.

FIG. 12B illustrates a partial cutaway side view of the second valve 700 while in the second cooking mode. Illustrating that rotation of the valve stem 710 in this configuration has the first channel 718 in communication with a pathway that ultimately routes gas to the Port 3 702 and the Port 2 704, and the second channel 732 in communication with a pathway that ultimately routes gas to the Port 1 708. While third channel 734 is blocked from receiving any of the intake gas.

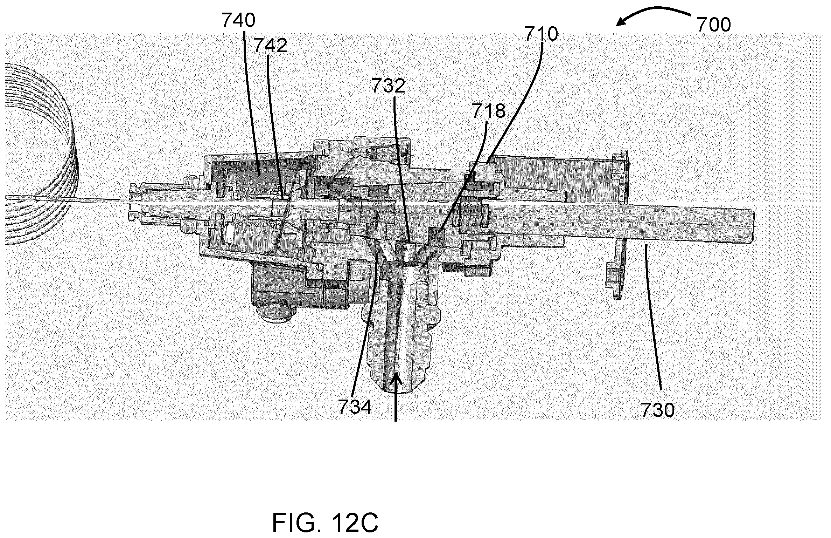

FIG. 12C illustrates a partial cutaway side view of the second valve 700 while in the second cooking mode. Illustrating that rotation of the valve stem 710 in this configuration has the first channel 718 and the second channel 732 blocked such that intake gas cannot flow through. The third channel 734 is in communication with a pathway that routes the intake gas through a capillary valve portion 740 that ultimately is in communication with the Port 1 708. The capillary valve portion 740 includes a spring loaded piston 742 that closes the flow of the gas to Port 1 708 when the pressure from the expanded fluid in the capillary tube 714 reaches a value associated with a desired temperature in the cooking grill. Rotation of the valve stem 710 provides different loading of the spring, and thus, different pressures that associate with different desired temperatures in the cooking grill. In further cases, the capillary valve portion 740 can be routed to a further port that connects directly to the first burner 19A and the fourth burner 19D, without passing through the first valves 16.

In some cases, the second valve 700 can also include a further channel in the valve stem 710 to select between different gas intake sources, such as natural gas and propane. The channel can be opened or closed based on a further valve stem.

While the above embodiment described, for exemplary purposes, a four burner cooking grill with four burners operable in the first cooking mode and two burners operable in the second cooking mode, it is understood that any suitable number and arrangement of burners can be used so long as the number of burners in the second cooking mode do not reach below a suitable and safe gas output level.

The embodiments described in this document provide non-limiting examples of possible implementations of the present technology. Upon review of the present disclosure, a person of ordinary skill in the art will recognize that changes may be made to the embodiments described herein without departing from the scope of the present technology. For example, the systems and methods are described in relation to gas-fired cooking grill but it is understood the systems and methods described herein are also applicable to other gas-fired appliances such as a gas-fired smoker, a gas-fired heater or a gas-fired fireplace. The manual and mechanical control of various aspects of system 11 in some embodiments may be advantageous because no electrical power source is required to operate some embodiments of system 11. However, it is understood that first valves 22 and/or second valve 24 may be electrically operated via electric motors/actuators and controllable via a suitable user interface such as a control panel or display. It is understood that second valve 24 could be implemented in other feedback control arrangements including a digital temperature controller and temperature sensing means such as a thermocouple or a thermistor for example. Yet further modifications could be implemented by a person of ordinary skill in the art in view of the present disclosure, which modifications would be within the scope of the present technology.

Although the foregoing has been described with reference to certain specific embodiments, various modifications thereto will be apparent to those skilled in the art without departing from the scope of the invention as outlined in the appended claims.

## Claims

1. A gas valve assembly (11) for a gas-fired cooking grill (10), the assembly comprising:
a plurality of first valves (22A, 22B, 22C, 22D) each to control flow of a combustible gas to a respective one of a plurality of gas burners (19A, 19B, 19C, 19D) for heating a cooking chamber (32) of the gas-fired cooking grill (10);
a gas intake (706) to receive a combustible gas from a combustible gas source; and
a second valve (24) comprising a thermostatic valve portion, the second valve disposed intermediate the gas intake and plurality of first valves and in fluid communication therewith, the second valve configured to receive input from a user for selection between a first cooking mode and a second cooking mode, the second valve routing the combustible gas from the gas intake to the plurality of first valves in the first cooking mode and routing the combustible gas from the gas intake to the thermostatic valve portion in the second cooking mode, the thermostatic valve portion selectively routing the combustible gas to a subset of the gas burners based on a comparison of a desired temperature and an actual temperature of the cooking chamber.

2. The gas valve assembly (11) of claim 1, wherein the second valve (24) is controlled by a control knob (14) operable by the user.

3. The gas valve assembly (11) of claim 2, wherein the control knob (14) cooperates with the second valve (24) to set the desired temperature.

4. The gas valve assembly (11) of claim 1, wherein the thermostatic valve portion is a capillary valve.

5. The gas valve assembly (11) of claim 4, wherein the capillary valve comprises a temperature sensor bulb for sensing temperature disposed in the cooking chamber (32), the temperature sensor bulb containing a fluid that expands when heated, the fluid coupled to a diaphragm that causes the capillary valve to move from an open position toward a closed position when the actual temperature of the cooking chamber exceeds the desired temperature.

6. The gas valve assembly (11) of claim 1, comprising four first valves (19A, 19B, 19C, 19D), wherein the second valve (24) configured to selectively bypass two of the four burners (16A, 16B, 16C, 16D).

7. The gas valve assembly (11) of claim 6, wherein the four burners (16A, 16B, 16C, 16D) are disposed in a generally parallel arrangement and the inner two of the four burners (16A, 16B, 16C, 16D) are the burners which are selectively bypassed.

8. The gas valve assembly (11) of claim 1, wherein the thermostatic valve portion comprises a plurality of ports, one of the ports (708) being coupled to at least one of the burners which is not selectively bypassed and another of the ports (702) being coupled to at least one of another of the burners which are selectively bypassed.

9. A gas-fired cooking grill (10), the grill comprising:
a cooking chamber (32);
a plurality of gas burners (19A, 19B, 19C, 19D) for heating the cooking chamber (32); and
the gas valve assembly (11) of any one of claims 1 to 8.

## Patentansprüche

1. Eine Gasventilanordnung (11) für einen gasbefeuerten Grill (10), wobei die Anordnung umfasst:
eine Vielzahl von ersten Ventilen (22A, 22B, 22C, 22D), die jeweils den Strom eines brennbaren Gases zu einem entsprechenden Gasbrenner einer Vielzahl von Gasbrennern (19A, 19B, 19C, 19D) zum Beheizen einer Garkammer (32) des gasbefeuerten Grills (10) steuern;
einen Gaseinlass (706) zur Aufnahme von brennbarem Gas aus einer brennbaren Gasquelle; und
ein zweites Ventil (24), das einen thermostatischen Ventilabschnitt umfasst, wobei das zweite Ventil zwischen dem Gaseinlass und der Vielzahl von ersten Ventilen angeordnet ist und in Fluidverbindung damit steht, wobei das zweite Ventil so konfiguriert ist, dass es von einem Benutzer eine Eingabe zur Auswahl zwischen einem ersten Kochmodus und einem zweiten Kochmodus empfängt, das zweite Ventil das brennbare Gas von dem Gaseinlass zu der Vielzahl von ersten Ventilen in dem ersten Kochmodus leitet und das brennbare Gas von dem Gaseinlass zu dem thermostatischen Ventilabschnitt in dem zweiten Kochmodus leitet, wobei der thermostatische Ventilabschnitt das brennbare Gas selektiv zu einer Untergruppe der Gasbrenner leitet, basierend auf einem Vergleich einer gewünschten Temperatur und einer tatsächlichen Temperatur der Garkammer.

2. Gasventilanordnung (11) nach Anspruch 1, das zweite Ventil (24) durch einen Steuerknopf (14) gesteuert wird, der durch den Benutzer betätigbar ist.

3. Gasventilanordnung (11) nach Anspruch 2, wobei der Steuerknopf (14) mit dem zweiten Ventil (24) zusammenwirkt, um die gewünschte Temperatur einzustellen.

4. Gasventilanordnung (11) nach Anspruch 1, wobei der thermostatische Ventilabschnitt ein Kapillarventil ist.

5. Gasventilanordnung (11) nach Anspruch 4, wobei das Kapillarventil einen Temperatursensorkolben zum Erfassen der Temperatur umfasst, der in der Garkammer (32) angeordnet ist, wobei der Temperatursensorkolben ein Fluid enthält, das sich ausdehnt, wenn es erwärmt wird, wobei das Fluid mit einer Membran verbunden ist, die bewirkt, dass sich das Kapillarventil von einer offenen Position in Richtung einer geschlossenen Position bewegt, wenn die tatsächliche Temperatur der Garkammer die gewünschte Temperatur übersteigt.

6. Gasventilanordnung (11) nach Anspruch 1, die vier ersten Ventile (19A, 19B, 19C, 19D) umfasst, wobei das zweite Ventil (24) so konfiguriert ist, dass es selektiv zwei der vier Brenner (16A, 16B, 16C, 16D) umgeht.

7. Gasventilanordnung (11) nach Anspruch 6, wobei die vier Brenner (16A, 16B, 16C, 16D) in einer im Allgemeinen parallelen Anordnung angeordnet sind und die inneren zwei der vier Brenner (16A, 16B, 16C, 16D) die Brenner sind, die selektiv umgangen werden.

8. Gasventilanordnung (11) nach Anspruch 1, wobei der thermostatische Ventilabschnitt eine Vielzahl von Anschlüssen aufweist, wobei einer der Anschlüsse (708) mit mindestens einem der Brenner verbunden ist, der nicht selektiv umgangen wird, und ein anderer der Anschlüsse (702) mit mindestens einem anderen der Brenner verbunden ist, die selektiv umgangen werden.

9. Ein gasbefeuerter Grill (10), wobei der Grill Folgendes umfasst:
eine Garkammer (32);
eine Vielzahl von Gasbrennern (19A, 19B, 19C, 19D) zum Beheizen der Garkammer (32); und
die Gasventilanordnung (11) nach einem der Ansprüche 1 bis 8.

## Revendications

1. Ensemble de vannes de gaz (11) pour un gril de cuisson à gaz (10), comprenant :
une pluralité de premières vannes (22A, 22B, 22C, 22D) contrôlant chacune l'écoulement d'un gaz combustible vers l'un des brûleurs à gaz (19A, 19B, 19C, 19D) pour chauffer une chambre de cuisson (32) du gril de cuisson à gaz (10) ;
une entrée de gaz (706) pour recevoir un gaz combustible provenant d'une source de gaz combustible ; et
une deuxième vanne (24) comprenant une partie de vanne thermostatique, la deuxième vanne étant disposée entre l'entrée de gaz et la pluralité de premières vannes et en communication fluide avec elles, la deuxième vanne étant configurée pour recevoir une entrée d'un utilisateur pour la sélection d'un premier mode de cuisson et d'un deuxième mode de cuisson, la deuxième vanne achemine le gaz combustible de l'entrée de gaz vers la pluralité de premières vannes dans le premier mode de cuisson et achemine le gaz combustible de l'entrée de gaz vers la partie de vanne thermostatique dans le deuxième mode de cuisson, la partie de vanne thermostatique acheminant sélectivement le gaz combustible vers un sous-ensemble de brûleurs à gaz sur la base d'une comparaison entre une température souhaitée et une température réelle de la chambre de cuisson.

2. L'ensemble de vannes de gaz (11) de la revendication 1, dans lequel la deuxième vanne (24) étant commandée par un bouton de commande (14) actionnable par l'utilisateur.

3. L'ensemble de vannes de gaz (11) de la revendication 2, dans lequel le bouton de commande (14) coopère avec la seconde vanne (24) pour régler la température souhaitée.

4. L'ensemble de vannes de gaz (11) de la revendication 1, dans lequel la partie de la vanne thermostatique est une vanne capillaire.

5. L'ensemble de vannes de gaz (11) de la revendication 4, dans lequel la vanne capillaire comprend un bulbe de capteur de température pour détecter la température disposée dans la chambre de cuisson (32), le bulbe de capteur de température contenant un fluide qui se dilate lorsqu'il est chauffé, le fluide étant couplé à un diaphragme qui fait passer la vanne capillaire d'une position ouverte vers une position fermée lorsque la température réelle de la chambre de cuisson dépasse la température souhaitée.

6. L'ensemble de vannes de gaz (11) de la revendication 1, comprenant quatre premières vannes (19A, 19B, 19C, 19D), dans lequel la deuxième vanne (24) est configurée pour contourner sélectivement deux des quatre brûleurs (16A, 16B, 16C, 16D).

7. L'ensemble de vannes de gaz (11) de la revendication 6, dans lequel les quatre brûleurs (16A, 16B, 16C, 16D) sont disposés de manière généralement parallèle et les deux brûleurs intérieurs des quatre brûleurs (16A, 16B, 16C, 16D) sont les brûleurs qui sont sélectivement contournés.

8. L'ensemble de vannes de gaz (11) de la revendication 1, dans lequel la partie de vanne thermostatique comprend une pluralité d'orifices, l'un des orifices (708) étant couplé à au moins un des brûleurs qui n'est pas sélectivement contourné et un autre des orifices (702) étant couplé à au moins un autre des brûleurs qui sont sélectivement contournés.

9. Un gril de cuisson à gaz (10), le gril comprenant :
une chambre de cuisson (32) ;
plusieurs brûleurs à gaz (19A, 19B, 19C, 19D) pour chauffer la chambre de cuisson (32) ; et
l'ensemble de vannes de gaz (11) de l'une quelconque des revendications 1 à 8.
